# EUROPEAN PATENT APPLICATION

(11) **EP 4 768 859 A2**
(43) Date of publication of application: **01.07.2026**
(21) Application number: 25217001.4
(22) Date of filing: 19.11.2025
(51) Int. Cl.: G01C 21/16

(54) **A METHOD FOR USE IN A MOVING PLATFORM FOR INITIALIZATION OF A VISUAL-INERTIAL ODOMETRY SYSTEM**

(30) Priority: 05.12.2024 SE 2451242
(71) Applicant: Vantor Sweden AB, 582 13 Linköping (SE)
(72) Inventor: SANDAHL, Patrik, Linköping (SE)
(74) Representative: Zacco Sweden AB

(57) **Abstract**

The present disclosure relates to methods (200; 300; 400) for use in a moving platform for initialization of a visual-inertial odometry system (100) comprising a camera (1) and an inertial measurement unit (2), IMU. The methods comprise determining (201) point correspondence between at least a first image captured by the camera and a textured 3D model of an environment containing 3D coordinates given in a predetermined global coordinate system. The methods further comprise determining a relative rotation between the predetermined global coordinate system used for the camera and a IMU coordinate reference system, or estimating (210) a relative translation and rotation between the first and second images in a scale of the predetermined global coordinate system using the determined first and second point correspondences, said estimate indicating the scale for movement of the camera (1) for use in initialization of the visual odometry system.

## Description

### TECHNICAL FIELD

The present disclosure relates to a method for use in a moving platform for initialization of a visual-inertial odometry system, a method for use in a moving platform for initialization of a visual odometry system, and platforms arranged to navigate in an environment.

### BACKGROUND

Navigation of vehicles, especially aerial vehicles, is today often based on a global navigation satellite system (GNSS), like GPS. This has the advantage that the position of the own vehicle is quite well known within some uncertainty. It can, however, happen that a vehicle has to travel through an area where a GNSS-signal is denied, for example during war or conflicts, or since some entity for whatever reason uses interfering transmitters to disturb GNSS-signals. Also technical failures might in principle cause GNSS-signal interruption.

To be able to navigate without GNSS some vehicles have inertial measurements units, IMU, on board. An IMU together with a navigation filter can be used to keep track of the vehicle's current position using a process called dead reckoning. These systems have, however, the tendency that the calculated position will differ from the real position more and more with time. This is due to the fact that errors entering the calculations add up. Therefore, the longer the time a vehicle navigates with an IMU only, the bigger the uncertainty about the actual real position of that vehicle.

In general, in navigation of a platform, for example an aerial system, visual odometry or inertial odometry can be used. In visual odometry, camera sensors are used for providing an estimate of where the platform is and how the platform is moving. Inertial odometry uses characteristically an inertial measurement unit, IMU, as discussed above.

In Visual-Inertial Odometry, Visual Odometry from camera images is combined with Inertial Odometry from an IMU. Visual-inertial odometry is for example used for estimating the state of autonomous aerial vehicles using only onboard sensors.

In Visual-Inertial Odometry, the camera and the IMU should be calibrated with each other. The problem of IMU and camera calibration has been studied in the art and there are different approaches for solving the problem. For example, a Kalman filter can be used during navigation.

### SUMMARY

It is an object of the present disclosure to mitigate, alleviate or eliminate one or more deficiency or disadvantage in the prior art.

According to a first aspect there is provided a method for use in a moving platform for initialization of a visual-inertial odometry system comprising a camera and an inertial measurement unit, IMU. The method comprises determining point correspondence between a first image captured by the camera and a textured 3D model of an environment containing 3D coordinates given in a predetermined global coordinate system, determining a global pose of the camera given in the predetermined global coordinate system using the determined point correspondence, determining a gravity vector of the camera based on the determined global pose, and determining a relative rotation between the predetermined global coordinate system used for the camera and a IMU coordinate reference system, for use in initialization of the visual-inertial odometry system.

Thus, in the disclosure herein, the coordinate system used for the camera is the predetermined global coordinate system of the textured 3D model of an environment containing 3D coordinates.

Normally, the Earth's gravity is a source of problems in IMU navigation. The gravity is often dominant over other accelerations measured by the IMU. Accordingly, errors in estimation of the gravity vector can make navigation unreliable if not accounted for correctly. The determination of the gravity vector using a textured 3D model of an environment containing 3D coordinates given in a predetermined global coordinate system as claimed provides an accurate measure of the gravity vector.

The determined gravity vector can then be used for determining a relative rotation between the predetermined global coordinate system used for the camera and a IMU coordinate reference system, for use in initialization of the visual-inertial odometry system. In doing this, potential IMU biases can be observed through use of the gravity vector. This in turn may lead to decreased errors in dead-reckoning.

Further, with solution as claimed is, in comparison to any prior art methods, fast to use.

The determining of a relative rotation between the predetermined global coordinate system used for the camera and the IMU coordinate reference system may comprise obtaining angular velocity measurement data from the IMU and determining the relative rotation based on the determined gravity vector and based on the angular velocity measurement data provided from the IMU.

The obtaining of the angular velocity measurement data from the IMU is characteristically made while making a turn of the moving platform around the gravity vector. However, in relation to any prior art methods, the requirements of the movement are largely reduced. The requirements are reduced when it comes to time spent for providing the angular velocity measurement data and/or when it comes to the complexity of the manoeuvres suitable to make while providing the angular velocity measurement data.

Visual-inertial odometry systems normally comprises a navigation filter estimating the state of the moving platform. The state includes for example pose and velocity. The method may then further comprise initializing the navigation filter with information relating to the relative rotation between the predetermined global coordinate system used for the camera and the IMU coordinate reference system. The information relating to the relative rotation may for example be a transformation between the predetermined global coordinate system used for the camera and the IMU coordinate reference system.

During use of the visual-inertial odometry system, this transformation can then be used for the navigation filter to transform camera parameters from the predetermined global coordinate system used for the camera to the IMU coordinate reference system.

According to some embodiments, the method comprises determining a second point correspondence between a second image captured by the camera at a second time and the textured 3D model of an environment containing 3D coordinates in the predetermined global coordinate system, determining a second global pose of the camera in the predetermined global coordinate system using the second determined point correspondence, and estimating a relative translation and rotation between the first and second images in a scale of the predetermined global coordinate system, such as a metric scale, using the determined first and second global poses, said estimate indicating the scale for movement of the camera, such as the metric scale, for use in initialization of the visual odometry system.

The estimated relative translation and rotation or information relating to the estimated relative translation and rotation may be provided to a navigation filter for use in initializing the navigation filter.

The scale of the predetermined global coordinate system may be a metric scale.

In navigation, in prior art, both the estimation of the gravity vector, as discussed above, and the lack of possibility to accurately map the positions provided to a reference scale contribute to errors in visual-inertial odometry systems. The use of the textured 3D model of an environment in a predetermined global coordinate system for determining point correspondence with at least two camera images, provides mapping between the images taken by the camera and the scale of the predetermined global coordinate system. Thus, the scale of the predetermined global coordinate system is inherently accessed.

The scale can then be used for comparison with and compensation of the distance measurements made using the IMU. Thus, when the navigation filter has the scale of the predetermined global coordinate system, the navigation filter can then correct errors in the distance measurements as provided based on IMU measurements.

In an example, comparison with and compensation of the distance measurements made using the IMU is performed as follows.

The first and second images are captured. Further, measurements of the IMU during capture of the first and second images are processed to determine the magnitude of errors in the distance measurements as provided from the IMU.

The capture of the first and second images may be made while making an acceleration movement and/or a turn of the platform. Preferably, there is an acceleration/retardation between the first and second images. As stated above, measurements of the IMU during capture of the first and second images are processed to determine the magnitude of errors in the distance measurements as provided from the IMU. The determined error can then be used in the navigation filter for error corrections.

In different embodiments, the method comprises determining a bias for the IMU based on
the obtained angular velocity measurement data from the IMU and the gravity vector determined 203 for the camera, and/or
positional information derived from acceleration measurement data from the IMU and the estimated scale for movement of the camera.

Accordingly, a navigation filter can during navigation use this determined bias in determining a state of the moving platform.

The navigation filter may estimate movement of the platform using IMU measurements and the determined bias for the IMU, so called dead-reckoning.

In different embodiments, the predetermined global coordinate system is a geographic coordinate system, wherein the determined global pose of the camera given in the geographic coordinate system is provided to the navigation filter for use in initialization of the filter with a geographic coordinate.

Thus, accurate geographical coordinates can then be provided during navigation even without use of Global Positioning System, GPS, or similar satellite-based radio navigation systems.

In an example, the determining of a first and/or second point correspondence comprises displaying the first and/or second image and the textured 3D model of the environment, and manually marking corresponding points between the first and/or second image and the textured 3D model of the environment. However, other methods for determining the point correspondence may be considered including fully automated or semi-automated image processing methods.

According to a second aspect there is provided a method for use in a moving platform for initialization of a visual odometry system comprising a camera, the method comprising determining first correspondence between a first image captured by the camera at a first time and a textured 3D model of an environment containing 3D coordinates in a predetermined global coordinate system, determining second point correspondence between a second image captured by the camera at a second time and the textured 3D model of an environment containing 3D coordinates in the predetermined global coordinate system, determining a first and a second global pose of the camera in the predetermined global coordinate system, respectively, using the first and second determined point correspondence, respectively, and estimating a relative translation and rotation between the first and second images in a scale of the predetermined global coordinate system using the determined first and second global poses, said estimate indicating the scale for movement of the camera for use in initialization of the visual odometry system (100).

Preferred embodiments are defined in the dependent claims.

According to a third aspect there is provided a platform having a visual-inertial odometry system comprising a camera and an inertial measurement unit. The visual-inertial odometry system further comprises a memory containing a textured 3D model of an environment containing 3D coordinates given in a predetermined global coordinate system and a processor for obtaining initialization data for initialization of the visual-inertial odometry system. The processor is arranged to
obtain point correspondence between a first image captured by the camera and a corresponding part of the textured 3D model of an environment containing 3D coordinates given in a predetermined global coordinate system,
determine a global pose of the camera in the predetermined global coordinate system using the determined point correspondence,
determine a gravity vector of the camera based on the determined global pose, and
determining a relative rotation between the predetermined global coordinate system used for the camera and a IMU coordinate reference system, for use in initialization of the visual-inertial odometry system.

Preferred embodiments have one or more of the features as defined in the dependent claims.

According to a fourth aspect there is provided a platform comprising visual odometry system comprising a camera. The visual odometry system comprises further a textured 3D model of an environment containing 3D coordinates given in a predetermined global coordinate system, and a processor for obtaining initialization data for initialization of the visual odometry system. The processor is arranged to
determine a first correspondence between a first image captured by the camera at a first time and a textured 3D model of an environment containing 3D coordinates in a predetermined global coordinate system,
determine a second point correspondence between a second image captured by the camera at a second time and the textured 3D model of an environment containing 3D coordinates in the predetermined global coordinate system,
determine a first global pose of the camera in the predetermined global coordinate system using the first determined point correspondence,
determining a second global pose of the camera in the predetermined global coordinate system using the second determined point correspondence, and
estimate a relative translation and rotation between the first and second images in a scale of the predetermined global coordinate system from a difference between the first and second global poses, said estimate indicating the scale for movement of the camera for use in initialization of the visual odometry system.

Preferred embodiments have one or more of the features as defined in the dependent claims.

According to some embodiments, the platform is an aerial platform.

Effects and features of the second through fourth aspects are to a large extent analogous to those described above in connection with the first aspect. Embodiments mentioned in relation to the first aspect are largely compatible with the second through fourth aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### BRIEF DESCRIPTION OF THE DRAWING

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Fig. 1a depicts schematically a situation where the present invention can be used.
Figure 1b is a block scheme schematically illustrating examples of configurations of a visual (-inertial) odometry system of a platform.
Figure 2 is a flow chart illustrating examples including determination of a gravity vector, of a method for use in a moving platform for initialization of a visual-inertial odometry system.
Figure 3 is a flow chart illustrating examples including determining a scale of a method for use in a moving platform for initialization of a visual (-inertial) odometry system.
Figure 4 is a flow chart illustrating examples including determining bias of a method for use in a moving platform for initialization of a visual -inertial odometry system.
Figure 5 is a flow chart illustrating an example of determining point correspondence between a first image captured by the camera and a textured 3D model of an environment containing 3D coordinates given in a predetermined global coordinate system.
Figures 6a and 6b illustrate an example sensor image and extract from a textured 3D model for use in determining point correspondence.
Figure 7 illustrates an example of a textured 3D model.

### DETAILED DESCRIPTION

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

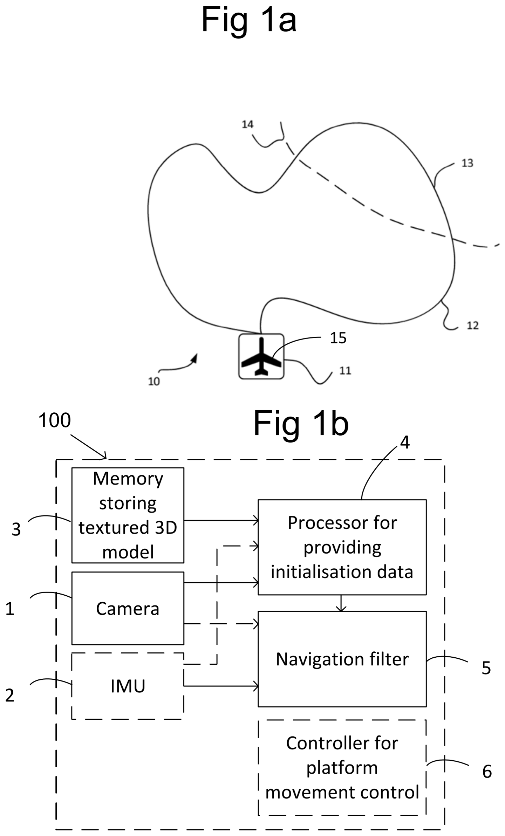

Fig. 1a depicts schematically a situation 10 where the present disclosure can be used. A platform 15, here illustrated as a vehicle such as an aerial vehicle will start at some starting point 11. The aerial vehicle can be any kind of aerial vehicle. In one example the aerial vehicle is an airplane or a helicopter. The aerial vehicle can be manned or unmanned. In one example the aerial vehicle is an unmanned aerial vehicle, UAV. The aerial vehicle can also be an aerial vehicle, which is not supposed to return to the starting point 11, like a missile or a rocket. The aerial vehicle can in principle be any kind of aerial vehicle, both a civilian and a military aerial vehicle.

The aerial vehicle may have means for receiving data provided from a GNSS and means for calculating the own position based on the GNSS-data. The starting point 11 can be any kind of starting point. In one example, the starting point is an aerodrome like an airport, an airfield, or a rocket launch site. It can also be a carrier. In one example the starting point is a missile launching unit. This can be situated on a naval unit, on a land-based unit or on an aerial unit. The aerial vehicle will after start from the starting point 11 fly along a flight path 12. In the example of Fig. 1a the flight path 12 returns to the starting point 11. In another example the flight path will go to a separate landing point. In yet another example the flight path will end at some point, for example a predetermined target point, such as a goods-delivery location or military target location. This can be a land-based target, a water-based target or an air-based target. The flight path 12 can be pre-determined or not. In one example the flight path 12 will be changed during flight of the aerial vehicle.

In general, the position and the attitude of the aerial vehicle at the starting point 11 is known. This can be due to sensors on the aerial vehicle. This can also be due to surveying of the starting point. It can also be due to sensors and/or some other pre-knowledge on the starting point, especially in case the starting point is moving. In one example the position and attitude of the starting point is known based on sensors of a carrier or another aerial vehicle. It can also be based on a GNSS, like GPS.

The aerial vehicle usually has a navigation system based on a GNSS which is arranged to determine an absolute position of the vehicle. This is, however, not a prerequisite of the present invention. Thus, the system might be vulnerable to technical failures of the GNSS, to service denial of the GNSS or to jamming. In the example of Fig. 1a the dotted line 14 indicates the border between an area where the GNSS reliably works (the area which is below and left of line 14) and an area where the GNSS does not reliably work (the area which is above and right of the line 14). In the example of Fig. 1a the aerial vehicle thus has to find another way to determine its position on the flight path 13.

In the following, when referring to a GNSS-denied area here and in the whole document, this can be due to any reason. It should not only comprise the case of actively denying GNSS, but also the case of GNSS denial due to technical reasons or due to any possible disturbance. The GNSS-denied area can in one example also comprise the starting point 11. In one example, the whole flight path is comprised in the GNSS-denied area. In another example different parts of flight path are comprised in the GNSS-denied area. The GNSS-denied area can also change during flight of the aerial vehicle.

The aerial vehicle may have some initial values for attitude and position before entering the GNSS-denied area. This can be due to the navigation system which includes a GNSS and which works before entering the GNSS-denied area, and/or it can be due to the knowledge of position and attitude from the starting point 11 as described above. There is no requirement having access to initial values for attitude or position. However, if available, this information can be useful as a support in providing suitable data from a textured 3D model for use in determining point correspondence, as will be described later herein.

The present disclosure can also be used in areas which are not GNSS-denied. In this case the disclosure can be used to check the validity of GNSS-data and/or the drift of an IMU with a navigation filter. The present disclosure can then also be used for increasing the position and/or attitude accuracy compared to only relying on GNSS and/or IMU with a navigation filter.

When entering a GNSS-denied area in a prior art situation, the position could have been determined with the help of a GNSS like GPS. After entering the GNSS-denied area the aerial vehicle will have to rely on an IMU and navigation filter since its GPS-receiver will not any longer be able to receive the signals needed to determine its position. The positions determined via the IMU and navigation filter and thus the travel path determined via the IMU and navigation filter will, however, differ from the real travel path. The difference will be bigger the more the time advances, as described in the background section.

In figure 1b, examples of configurations of an odometry system 100 of a platform 15 such as the aerial vehicle of figure 1a are illustrated.

The platform may be landbased or airborne or marine.

The odometry system 100 is for example a visual odometry system. In visual odometry, camera sensors are used for providing an estimate of where the platform is and how the platform is moving.

The odometry system 100 is for example a visual-inertial odometry system. In Visual Inertial Odometry, Visual Odometry from camera images are combined with Inertial Odometry from an inertial measurement unit, IMU. In an exemplary embodiment, Visual-inertial odometry is, for example, used for estimating the state of autonomous aerial vehicles using only onboard sensors.

The odometry system 100 in figure 1b comprises a camera 1 and an inertial measurement unit, IMU, 2. In Visual-Inertial Odometry, the camera 1 and the IMU 2 should be calibrated with each other. The problem of IMU and camera calibration has been studied in the art and there are different approaches for solving the problem. For example, a Kalman filter can be used in operation for sensor fusion.

The odometry system 100 in figure 1b comprises further a memory 3 on which a textured 3D model of an environment containing 3D coordinates given in a predetermined global coordinate system.

The predetermined global coordinate system may be a geographic coordinate system. A base of the predetermined global coordinate system may be a metric base, an imperial base or the like.

The textured 3D model contains three-dimensional, preferably geo-referenced, information of the environment. The textured 3D model could be any kind of 3D model known to those skilled in the art with associated texture information. In an embodiment, the textured 3D model is represented as a textured mesh. In another embodiment, the textured 3D model is represented as a textured surface representation. In yet another embodiment, the textured 3D model is represented as a textured voxel representation. In an additional embodiment, the textured 3D model is a point cloud with associated texture information. In still another embodiment the three-dimensional geo-referenced information of the environment is represented in such a way that a textured 3D model or a 3D map of the environment could be constructed based on the information above. In one example the 3D map is a triangular irregular network (tin)-based mesh draped with textures.

Irrespectively of how the textured 3D model is obtained, the 3D model includes a texture, i.e. is draped with a texture, or is associated with texture information. The texture/texture information may be provided from photographs of locations corresponding to the coordinates of the 3D model. The photographs may be photographs used in building the 3D aspects of the textured 3D model or photographs captured before or after building the 3D aspects of the textured 3D model. The photographs may have been processed before being used as texture/texture information of the 3D model.

In some examples, a positional or mesh uncertainty is associated to at least some of the nodes/surfaces/edges of the mesh. The mesh uncertainty associated to each respective node/surface/edge represents the uncertainty at that specific point of the model.

In an example implementation, the memory 3 containing the textured 3D model is located on a separate device, such a laptop. In another example, the memory 3 containing the textured 3D model may be stored at the platform itself. Irrespectively, the memory 3 may be arranged to be uploaded with a suitable part of the textured 3D model. However, the textured 3D model may instead or in part be stored elsewhere and access is then provided via for example radio communication.

In detail, the memory 3 storing the textured 3D model may be located on-board the platform. This has the advantage that the time for the platform to access the memory is minimised, which can be important for navigation purposes. Another advantage is that the memory is easily available for the platform which then needs not to rely on radio communication and/or communication to a satellite. This will make navigation of the platform less vulnerable. The memory is for example a non-volatile memory (e.g., non-transitory memory) on board the platform. In another example the memory is located externally, i.e. not on board platform. For example, the memory 3 may be located on a close by aerial vehicle. In another example the memory 3 is located on a water-based or land-based facility or vehicle. The memory 3 can in principle be placed anywhere as long as there is the possibility for the odometry system 100 to access at least relevant parts of the textured 3D model. In one example this is achieved via a communication channel.

Generally, a part of the textured 3D model of the memory 3 is extracted for use in determining point correspondence with a sensor image. The determination of point correspondence will be discussed further in detail below. Input data for use in finding the relevant part of the textured 3D model may for example be manually provided geographical coordinate information or information provided from an onboard GNSS based navigation system, or a combination thereof. The manually provided geographical coordinate information may for example include user input of coordinates via a user interface, such as by using a key board for input of coordinate data or marking an area in a map as presented on a display. The map may be the textured 3D model itself or another 2D or 3D map. The odometry system 100 comprises further a sensor in the form of at least one camera 1. The camera is arranged to capture images of the environment as modelled by the textured 3D model. The camera is any type of camera capable of capturing features visible in the textured 3D model.

The at least one camera may comprise a plurality of cameras. The at least one camera may comprise at least one camera from the group comprising
- at least one camera capable of detection in the visible wavelength-range.
- at least one infrared camera,
- at least one ultraviolet camera,
- at least one a multispectral camera, and
- at least one hyperspectral camera.

The at least one camera has its field of view.

If detailed input data is available comprising information related to pitch angle, roll angle, yaw angle and three-dimensional position of the platform, and thus related to pitch angle, roll angle, yaw angle and three-dimensional position of camera of the platform, it is possible to provide a two-dimensional image from the textured 3D model which accurately maps images captured by the camera.

The two-dimensional image from the 3D model may be provided in such a way that it is projected onto the field of view of the camera, where it is assumed that the platform has its pitch angle, roll angle, yaw angle and three-dimensional position according to the input data.

However, it is not a requirement to provide two-dimensional images from the textured 3D model which accurately maps the camera image as explained above. The important thing is that a two-dimensional image can be provided from the 3D model, which has visible features which are also visible in an image captured by the camera.

At least in some examples, the odometry system 100 comprises also an inertial measurement unit, IMU, 2. The IMU 2 comprises characteristically gyros, accelerometers and optionally also magnetometers.

Further, the odometry system comprises a processor 4 for obtaining initialization data for initialization of the visual-inertial odometry system 100. The processor is for example arranged to execute software instructions for obtaining the initialization data for initialization of the visual-inertial odometry system.

The processor 4 for obtaining initialization data is arranged to receive images captured by the camera. The processor may further be arranged to receive data from the IMU 2.

The processor 4 for obtaining initialization data may be arranged to obtain point correspondence between a first image captured by the camera and a corresponding part of the textured 3D model of the environment containing 3D coordinates given in the predetermined global coordinate system. The point correspondence may for example be obtained for three or more points in the image captured by the camera and two-dimensional image as provided form the textured 3D model.

The processor 4 for obtaining initialization data is further arranged to determine a global pose of the camera in the predetermined global coordinate system using the determined point correspondence and the knowledge of the global coordinates of the points in the two-dimensional image, for which the point correspondence to the camera image has been determined, as provided from the textured 3D model.

The processor 4 for obtaining initialization data is further arranged to determine a gravity vector of the camera based on the determined global pose. The gravity vector can be derived from the global pose through characteristics of the predetermined global coordinate system of the 3D model. The determination of the gravity vector may for example involve determining an angle between the pose and the gravitational field.

Thus, as the global pose defines the orientation of the camera relative to the predetermined global coordinate system, and the orientation of the global coordinate system relative to gravity is known, the method can determine the gravity vector as expressed in the camera's own coordinate reference system.

The processor 4 for obtaining initialization data is further arranged to determine a relative rotation between the predetermined global coordinate system used for the camera, in which gravity represents one dimension, and a IMU coordinate reference system, for use in initialization of the visual-inertial odometry system (100).

In detail, the processor 4 for obtaining initialization data may be arranged to, for providing initialization data, obtain angular velocity measurement data as received from the IMU 2 and determine the relative rotation between the camera 1 and the IMU based on the determined gravity vector and based on the angular velocity measurement data provided from the IMU.

In an example implementation, the processor 4 for obtaining initialization data is located on a separate device, such a laptop. In another example, the processor 4 for obtaining initialization data may be stored at the platform itself. All or parts of the processor 4 for obtaining initialization data may instead or in part be stored elsewhere and access is then provided via for example radio communication.

The processor 4 may comprise hardware and software, said software comprising instructions to execute the functionality as presented herein.

The visual-inertial odometry system 100 may further comprise a navigation filter 5. The navigation filter 5 is arranged to estimate a state of the moving platform. The state includes for example pose and velocity. Characteristically, the navigation filter uses as a base the data provided by the IMU. IMU based navigation filters are known in the art and comprises for example Kalman filters or other technology. The navigation filter may be used to keep track of the platform's current position using a process called dead reckoning. However, prior art navigation filters have a tendency that the calculated position will differ from the real position more and more with time. This is due to the fact that errors in the navigation filter will add up. Therefore, the longer the time a vehicle navigates with an IMU and navigation filter only, the bigger the uncertainty about the actual real position of that platform. The processor 4 for obtaining initialization data as discussed herein is capable of removing or at least decrease this problem of prior art.

The processor 4 for providing initialization data may be arranged to feed information relating to the relative rotation between the predetermined global coordinate system used for the camera and the IMU coordinate reference system to the navigation filter 5 for initializing of the navigation filter.

Instead, or in addition to, providing the information relating to the relative rotation between the predetermined global coordinate system used for the camera and the IMU coordinate reference system, the processor may be arranged to estimate a scale for movement of the camera 1 for use in initialization of the visual odometry system.

The processor 4 for obtaining initialization data is then configured to, in addition to determining a first correspondence between a first image captured by the camera at a first time and the textured 3D model of an environment containing 3D coordinates in a predetermined global coordinate system, also determine a second point correspondence between a second image captured by the camera at a second time and the textured 3D model of an environment containing 3D coordinates in the predetermined global coordinate system. The processor 4 for obtaining initialization data is further arranged to estimate a relative translation and rotation between the first and second images in a scale of the predetermined global coordinate system using the determined first and second point correspondences, said estimate indicating the scale for movement of the camera 1 for use in initialization of the visual odometry system 100. Note that the first time is different than the second time. In practice, a first global pose of the camera is determined in the predetermined global coordinate system using the first determined point correspondence, and a second global pose of the camera is determined in the predetermined global coordinate system using the second determined point correspondence. The relative translation and rotation between the first and second images in a scale of the predetermined global coordinate system is then estimated from difference between the second global poses, said estimate indicating the scale for movement of the camera for use in initialization of the visual odometry system.

The processor 4 for providing initialization data may be configured to feed information relating to said estimate indicating the scale for movement of the camera 1 to the navigation filter 5 for initializing of the navigation filter.

In some embodiments, the odometry system 100 may further comprise a controller 6 for platform movement control. The controller is arranged to control manoeuvre of the platform, such as a turn and/or acceleration/retardation of the platform, wherein the processor for providing initialization data is arranged to simultaneously obtain measurement data from the IMU.

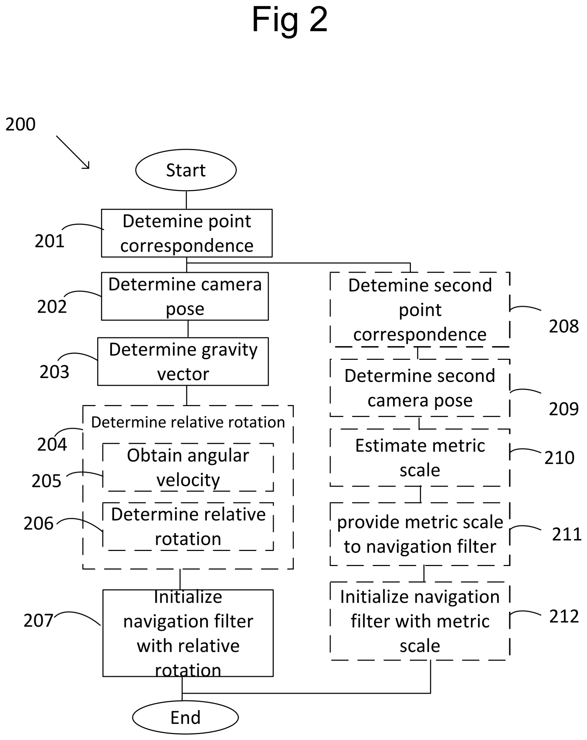

Figure 2 illustrates an example method 200 which may use an odometry system having at least some of the features as discussed in relation to figure 1b. The method 200 is for use in navigation of a moving platform. The method 200 is used for initialization of a visual-inertial odometry system 100 comprising a camera 1 and an inertial measurement unit 2, IMU.

The method 200 comprises determining 201 point correspondence between a first image captured by the camera and a textured 3D model of an environment containing 3D coordinates given in a predetermined global coordinate system.

The method 200 further comprises determining 202 a global pose of the camera in the predetermined global coordinate system using the determined point correspondence.

The method 200 further comprises determining 203 a gravity vector of the camera based on the determined global pose.

The gravity vector may be provided to a navigation filter for use in initializing the navigation filter with a relative rotation between the predetermined global coordinate system used for the camera and the IMU coordinate reference system
The method 200 further comprises determining 204 a relative rotation between the predetermined global coordinate system used for the camera and a IMU coordinate reference system, for use in initialization of the visual-inertial odometry system. The determining of a relative rotation between the predetermined global coordinate system used for the camera and the IMU coordinate reference system may comprise obtaining 205 angular velocity measurement data from the IMU and determining 206 the relative rotation based on the determined gravity vector and based on the angular velocity measurement data provided from the IMU. The obtaining 206 of the angular velocity measurement data from the IMU may be carried out while making a turn of the moving platform.

The method 200 further comprises initializing 207 the navigation filter with information relating to the relative rotation between the predetermined global coordinate system used for the camera and the IMU coordinate reference system. The information relating to the relative rotation may for example be a transformation between the predetermined global coordinate system used for the camera and the IMU coordinate reference system as obtained from the relative rotation between the predetermined global coordinate system used for the camera and the IMU coordinate reference system. During use of the visual-inertial odometry system, this transformation can then be used for the navigation filter to transform camera parameters from the predetermined global coordinate system used for the camera to the IMU coordinate reference system.

Thus, the determined gravity vector and(/or the determined relative rotation may be provide to the navigation filter for initialization.

The method 200 may further comprise determining 208 a second point correspondence between a second image captured by the camera at a second time and the textured 3D model of an environment containing 3D coordinates in the predetermined global coordinate system. The images are preferably captured while making an acceleration movement and/or a turn of the platform.

The method 200 further comprises determining 209 a second global pose of the camera in the predetermined global coordinate system using the second determined point correspondence.

A relative translation and rotation between the first and second images can then be estimated 210 in a scale of the predetermined global coordinate system using a difference between the first and second poses, said estimate indicating the scale for movement of the camera as determined by the predetermined global coordinate system.

The method 200 may then comprise providing 211 the estimated relative translation and rotation to the navigation filter for use in initializing the navigation filter. The navigation filter is then initialized 212 with the scale of the predetermined global coordinate system as determined by the estimated relative translation and rotation. The scale of the predetermined global coordinate system may be a metric scale.

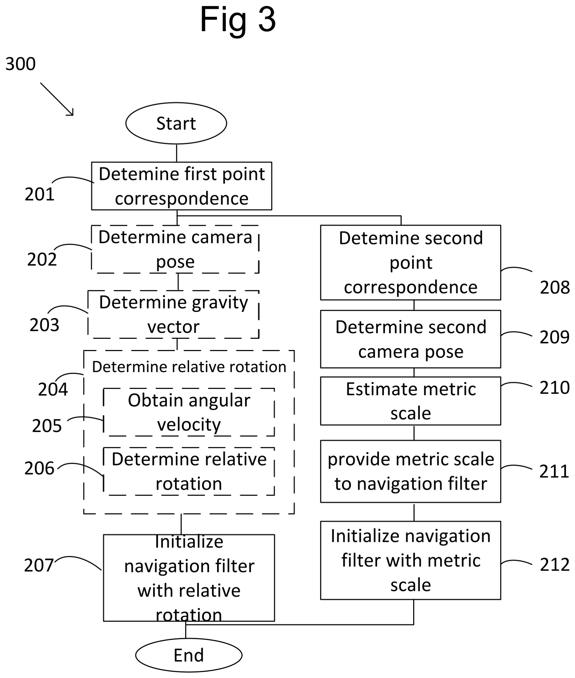

Figure 3 illustrates an example method 300, which may use an odometry system having at least some of the features as discussed in relation to figure 1b. The method 300 is for use in navigation of a moving platform. The method 300 is used for initialization of a visual-inertial odometry system 100 comprising a camera 1 and an inertial measurement unit 2, IMU.

The disclosure of figure 3 corresponds to the disclosure of figure 2, with the difference that in figure 2 the right side of the flow chart is optional while in figure 3 the left side of the flow chart is optional.

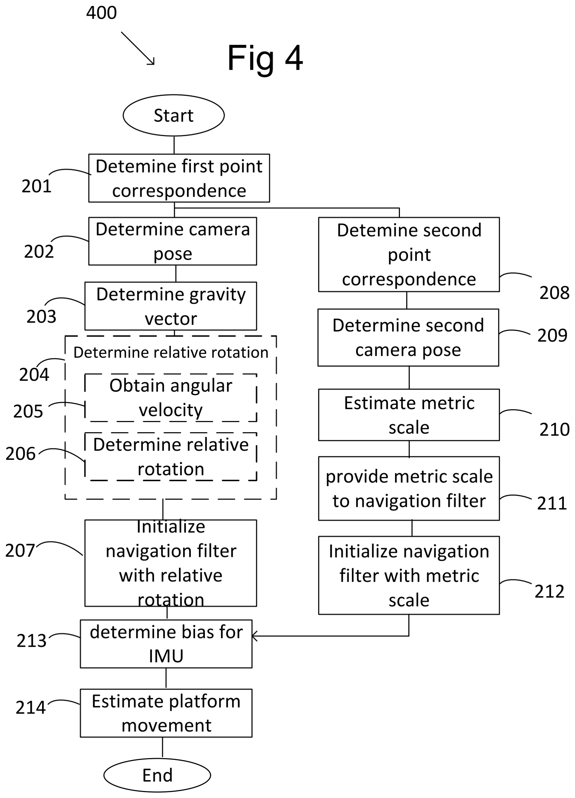

Figure 4 illustrates an example method 300, which may use an odometry system having at least some of the features as discussed in relation to figure 1b. The method 400 is for use in navigation of a moving platform. The method 400 is used for initialization of a visual-inertial odometry system 100 comprising a camera 1 and an inertial measurement unit 2, IMU.

In the example of figure 4, both the steps on the left side and the steps on the right side of the flow charts in figures 2 and 3 are mandatory.

Further, the method 400 comprises determining 213 a bias for the IMU based on the obtained 205 angular velocity measurement data from the IMU and the gravity vector determined 203 for the camera, and/or positional information derived from acceleration measurement data from the IMU and the estimated 210 metric scale for movement of the camera.

For example, the positional information is derived by integrating acceleration measurement data from the IMU obtained between the capture of the first and second images. This IMU-derived position change, which may contain scale errors or biases, is then compared to the estimated relative translation 210, which represents the 'true' scale-accurate position change derived from the 3D model, to determine the IMU bias.

When the odometry system has been initialized as exemplified herein, in use in navigation, movement of the platform can be estimated 214 using IMU measurements and the determined bias for the IMU, so called dead-reckoning.

In figures 2-4, the predetermined global coordinate system is a geographic coordinate system. The determined global pose of the camera given in the geographic coordinate system can then be provided to the navigation filter for use in initialization of the filter with a geographic coordinate.

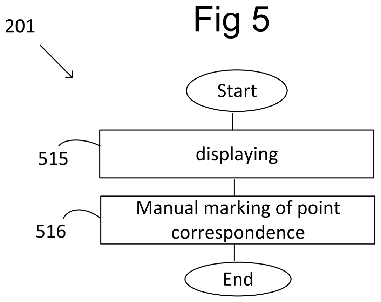

Figure 5 illustrates an example of determining 201, 208 of a first and/or second point correspondence. The determination of point correspondence comprises in accordance with this example displaying 515 the first and/or second image and the textured 3D model of the environment, and manually marking 516 corresponding points between the first and/or second image and the textured 3D model of the environment.

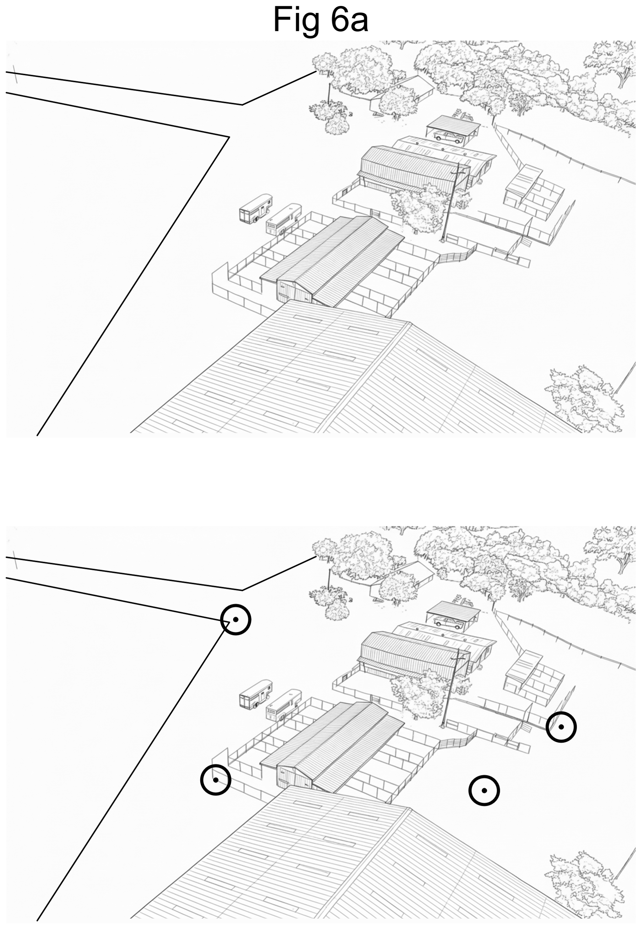

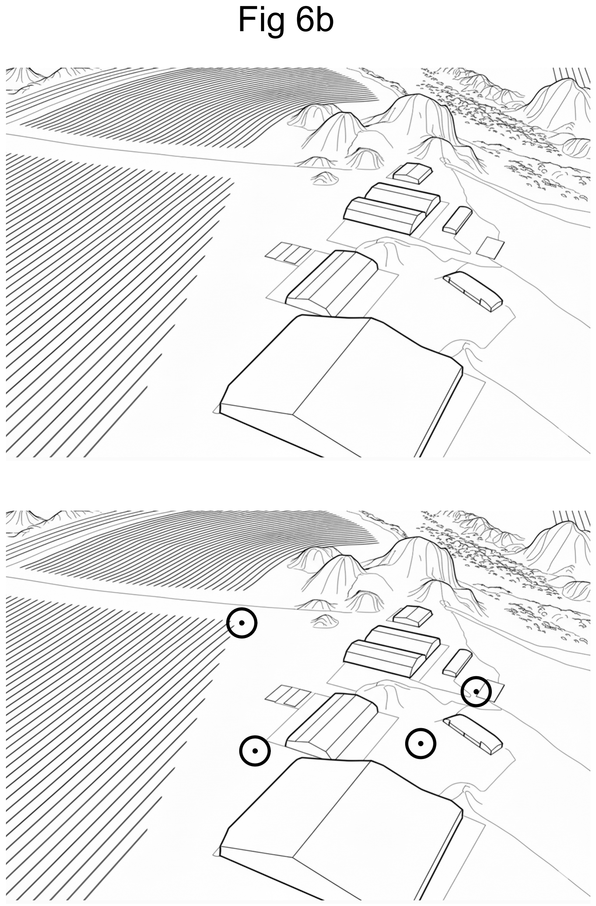

Figures 6a and 6b illustrate an example of display views for use in determining point correspondence.

In 6a, a sensor image is displayed. The upper part of the figure displays the sensor image. In the lower part of the figure, circles have been added representing locations in the sensor image which are intended for use in determining point correspondence with a textured 3D model.

In figure 6b, a part of the textured 3D model is displayed. The upper part of the figure displays the displayed part of the textured 3D model. In the lower part of the figure, circles have been added representing locations in the textured 3D model which are used in determining point correspondence with the sensor image.

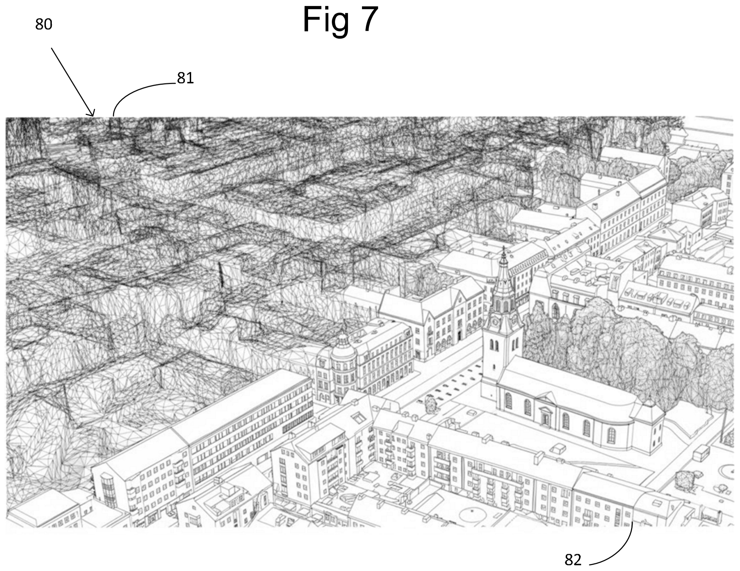

Figure 7 illustrates an example of a textured 3D model 9 of an environment containing 3D coordinates given in a predetermined global coordinate system. This textured 3D model 9 may be used in the disclosure as presented herein.

The lower right part 7 the 3D model 9 comprises geocoded reference data and texture information while the upper left part comprises only geocoded reference data. After generation of the geocoded reference data the 3D map 9 looks like the upper left part 8 of the 3D map 9. The texture information is then applied by for example using the texture of at least some of the 2D images or to create the 3D model 3D as is shown in the lower right part 7

The textured 3D model may be formed based on at least partly overlapping images comprises performing bundle adjustment. Given a set of images depicting a number of 3D points from different viewpoints, bundle adjustment can be defined as the problem of simultaneously refining the 3D coordinates describing the scene geometry as well as the parameters of the relative motion and the optical characteristics of the camera(s) employed to acquire the images, according to an optimality criterion involving the corresponding image projections of all points.

There are a different ways of representing textured 3D model. The textured 3D model may be represented as a mesh, as a surface representation, or as a voxel representation.

The textured 3D model may be provided based on other information than camera images. For example, the 3D map representation may be provided based on any type of distance measurements. For example, example LIDAR, sonar, distance measurement using structured light and/or radar can be used instead of or in addition to measurements based on camera images. The camera for example can be a camera for visual light or an IR camera.

For example, processing may be performed to provide the results of a plurality of distance measurements to each area from a plurality of geographically known positions using a distance determining device. The 3D model is then provided for each area based on the plurality of distance measurements.

In the illustrated example, the 3D model is represented as a mesh. A processor is arranged to form the mesh based on the map representation specified in the three geographical dimensions. Further, texture information from the original images may be associated to the surfaces of the mesh. In detail, the processor is arranged to form the mesh by forming nodes interconnected by edges forming surfaces defined by the edges, wherein each node is associated to a three-dimensional geocoded reference data in a geographical coordinate system.

## Claims

1. A method (200; 400) for use in a moving platform for initialization of a visual-inertial odometry system (100) comprising a camera (1) and an inertial measurement unit (IMU) (2), said method comprising
determining (201) point correspondence between a first image captured by the camera and a textured 3D model (9) of an environment containing 3D coordinates given in a predetermined global coordinate system,
determining (202) a global pose of the camera in the predetermined global coordinate system using the determined point correspondence,
determining (203) a gravity vector of the camera based on the determined global pose, and
using the determined gravity vector for determining (204) a relative rotation between the predetermined global coordinate system used for the camera and a IMU coordinate reference system, for use in initialization of the visual-inertial odometry system (100).

2. The method according to claim 1, further comprising initializing a navigation filter with information relating to the relative rotation between the predetermined global coordinate system used for the camera and the IMU coordinate reference system.

3. The method according to any of the preceding claims, wherein the determining of a relative rotation between the predetermined global coordinate system used for the camera and the IMU coordinate reference system comprises
obtaining (205) angular velocity measurement data from the IMU and
determining (207) the relative rotation based on the determined gravity vector and based on the angular velocity measurement data provided from the IMU,
wherein optionally obtaining (206) the angular velocity measurement data from the IMU is made while making a turn of the moving platform.

4. The method according to any of the preceding claims, further comprising
determining (208) a second point correspondence between a second image captured by the camera (1) at a second time and the textured 3D model of an environment containing 3D coordinates in the predetermined global coordinate system,
determining (209) a second global pose of the camera in the predetermined global coordinate system using the second determined point correspondence.
estimating (210) a relative translation and rotation between the first and second images in a scale of the predetermined global coordinate system from a difference between the first and second global poses, said estimate indicating the scale for movement of the camera as determined by the predetermined global coordinate system,
providing (211) the estimated relative translation and rotation to a navigation filter for use in initializing the navigation filter,
optionally further comprising initializing (212) the navigation filter with the scale of the predetermined global coordinate system using the estimated relative translation and rotation.

5. The method according to any of the preceding claims, wherein a scale of the predetermined global coordinate system is a metric scale.

6. A method (300; 400) for use in a moving platform for initialization of a visual odometry system (100) comprising a camera (1), said method comprising
determining (201) first correspondence between a first image captured by the camera at a first time and a textured 3D model of an environment containing 3D coordinates in a predetermined global coordinate system,
determining (208) second point correspondence between a second image captured by the camera at a second time and the textured 3D model of an environment containing 3D coordinates in the predetermined global coordinate system,
determining (202) a first global pose of the camera in the predetermined global coordinate system using the first determined point correspondence
determining (209) a second global pose of the camera in the predetermined global coordinate system using the second determined point correspondence, and
estimating (210) a relative translation and rotation between the first and second images in a scale of the predetermined global coordinate system from a difference between the determined first and second global poses, said estimate indicating the scale for movement of the camera (1) for use in initialization of the visual odometry system (100).

7. The method according to claim 6, further comprising
providing (211) the estimated relative translation and rotation to a navigation filter (5) for use in initializing the navigation filter,
optionally further comprising initializing (212) the navigation filter (5) with the scale of the predetermined global coordinate system using the estimated relative translation and rotation.

8. The method according to any of claims 6-7, wherein the visual odometry system is part of a visual-inertial odometry system, said method further comprising
determining (202) a global pose of the camera in the predetermined global coordinate system using the determined first and/or second point correspondence,
determining (203) a gravity vector of the camera based on the determined global pose,
providing the determined gravity vector to a navigation filter for use in initializing the navigation filter with a relative rotation between the predetermined global coordinate system used for the camera and the IMU coordinate reference system,
optionally further comprising initializing (207) the navigation filter with the relative rotation between the camera and the IMU based on the determined gravity vector and based on angular velocity measurement data provided from the IMU.

9. The method according to any of the claims 6-8, wherein the first and second images are captured while making an acceleration movement and/or a turn of the platform.

10. The method according to any of the preceding claims, further comprising determining (213) a bias for the IMU based on
the obtained (205) angular velocity measurement data from the IMU and the gravity vector determined (203) for the camera, and/or
positional information derived from acceleration measurement data from the IMU and an estimated scale for movement of the camera,
optionally further comprising estimating (214) movement of the platform using IMU measurements and the determined bias for the IMU.

11. The method according to any of the preceding claims, wherein the predetermined global coordinate system is a geographic coordinate system and wherein the determined global pose of the camera given in the geographic coordinate system is provided to a navigation filter for use in initialization of the filter with a geographic coordinate.

12. The method according to any of the preceding claims, wherein the determining (201) of a first point correspondence and/or determining (208) of a second point correspondence comprises displaying (515) the first and/or second image and the textured 3D model of the environment, and manually marking (516) corresponding points between the first and/or second image and the textured 3D model of the environment.

13. A platform (15) having a visual-inertial odometry system (100) comprising a camera (1) and an inertial measurement unit (2) said visual-inertial odometry system further comprising
a memory (3) storing a textured 3D model of an environment containing 3D coordinates given in a predetermined global coordinate system,
a processor (4) for obtaining initialization data for initialization of the visual-inertial odometry system (100), said processor being arranged to
obtain point correspondence between a first image captured by the camera and a corresponding part of the textured 3D model of an environment containing 3D coordinates given in a predetermined global coordinate system,
determine a global pose of the camera in the predetermined global coordinate system using the determined point correspondence,
determine a gravity vector of the camera based on the determined global pose,
using the determined gravity vector for determining a relative rotation between the predetermined global coordinate system used for the camera and a IMU coordinate reference system, for use in initialization of the visual-inertial odometry system (100).

14. The platform according to claim 13, wherein the visual-inertial odometry system further comprises a navigation filter (5), and wherein the processor (4) for providing initialization data is arranged to feed information relating to the relative rotation between the predetermined global coordinate system used for the camera and the IMU coordinate reference system to the navigation filter (5) for initializing of the navigation filter.

15. The platform according to claim 13 or 14, wherein the processor for providing initialization data is arranged to
obtain angular velocity measurement data from the IMU (2) and
determine the relative rotation based on the determined gravity vector and based on the angular velocity measurement data provided from the IMU,
wherein optionally the visual-inertial odometry system further comprises a controller (6) for platform movement control, said controller being arranged to control a turn and/or acceleration/retardation of the platform, wherein the processor for providing initialization data is arranged to simultaneously obtain measurement data from the IMU.

16. Platform comprising visual odometry system (100) comprising a camera (1), said visual odometry system further comprising
a memory (3) storing a textured 3D model of an environment containing 3D coordinates given in a predetermined global coordinate system,
a processor (4) for obtaining initialization data for initialization of the visual odometry system (100), said processor being arranged to
determine a first point correspondence between a first image captured by the camera at a first time and the textured 3D model (9) of an environment containing 3D coordinates in a predetermined global coordinate system,
determine a second point correspondence between a second image captured by the camera at a second time and the textured 3D model of an environment containing 3D coordinates in the predetermined global coordinate system,
determine a first global pose of the camera in the predetermined global coordinate system using the first determined point correspondence,
determine a second global pose of the camera in the predetermined global coordinate system using the second determined point correspondence, and
estimate a relative translation and rotation between the first and second images in a scale of the predetermined global coordinate system using the determined first and second global poses, said estimate indicating the scale for movement of the camera (1) for use in initialization of the visual odometry system (100).

17. The platform according to claim 16, wherein the visual odometry system further comprises a navigation filter (5), and wherein the processor (4) for providing initialization data is arranged to feed information relating to said estimate indicating the scale for movement of the camera (1) to the navigation filter (5) for initializing of the navigation filter.

18. The platform according to claim 16 or 17, wherein the visual odometry system is part of a visual-inertial odometry system and wherein the processor (4) for providing initialization data is arranged to
obtain acceleration measurement data from an IMU (2) and
determine an error in a scale as provided by the IMU (2) based on the obtained acceleration measurement data and the estimate indicating the scale for movement of the camera,
wherein optionally the visual-odometry system further comprises a controller (6) for platform movement control, said controller being arranged to control a manoeuvre comprising an acceleration/retardation of the platform, wherein the processor for providing initialization data is arranged to simultaneously obtain the measurement acceleration data from the IMU and to control capture the first and second images at known instances during the acceleration/retardation of the platform.

19. The platform according to any of the claims 13-18, wherein the platform is an aerial platform.
